# EUROPEAN PATENT APPLICATION

(11) **EP 1 785 187 A1**
(43) Date of publication of application: **16.05.2007**
(21) Application number: 06021353.5
(22) Date of filing: 11.10.2006
(51) Int. Cl.: B01J 23/42, B01J 23/50, C01B 3/16, C01B 3/48

(54) **Catalyst for water gas shift reaction and preparation method thereof**

(30) Priority: 10.11.2005 KR 20050107727
(71) Applicant: LG Electronics Inc., Yongdungpo-gu Seoul (KR); LG Chem, Ltd., Yongdungpo-Gu Seoul (KR)
(72) Inventor: Kang, Jung-Hwa, Seoul (KR); Park, Myung-Seok, Gwangmyeong, Gyeonggi-Do (KR); Lee, Won-Ho, Seo-Gu, Daejeon (KR)
(74) Representative: TER MEER - STEINMEISTER & PARTNER GbR

(57) **Abstract**

A catalyst for a water gas shift reaction of a fuel cell in which a titanium or silver is supported on a platinum, and a preparation method thereof, wherein the catalyst for the water gas shift reaction of the fuel cell can provide a superior conversion ratio of carbon monoxide and a superior generation ratio of hydrogen gas to thus supply a fuel having an enhanced quality to a stack unit of the fuel cell.

## Description

### BACKGROUND OF THE INVENTION

### 1. Field of the Invention

The present invention relates to a catalyst for a water gas shift reaction of a fuel cell and a preparation method thereof, and particularly, to a catalyst for a water gas shift reaction of a fuel cell and a preparation method thereof, capable of providing a fuel of an enhanced quality to a stack unit by improving performance of a catalyst which is used in a reaction of the stack unit of the fuel cell.

### 2. Background of the Invention

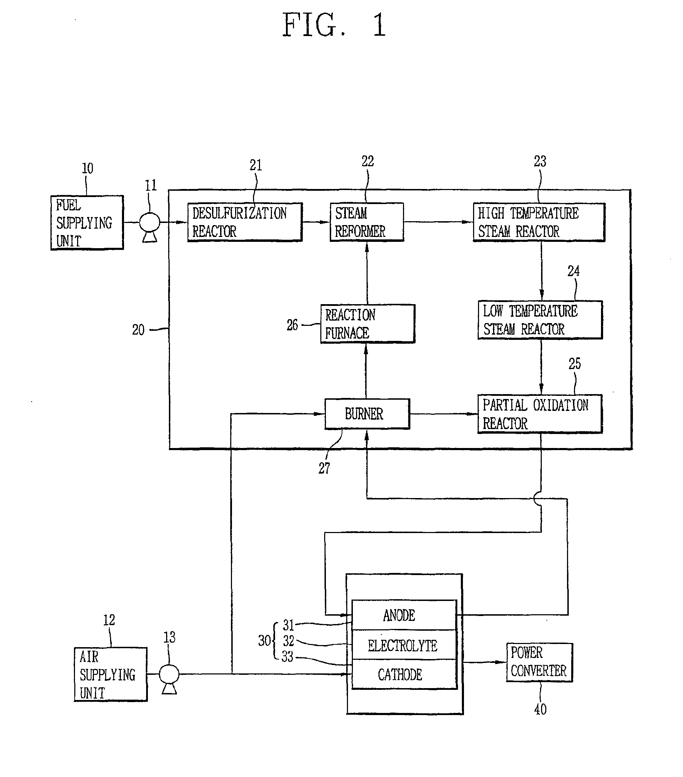

As shown in Fig. 1, a related art fuel cell may include a fuel supply unit 10 for supplying a certain amount of fuel, a reformer 20 for generating a hydrogen containing gas containing a hydrogen gas and heat by receiving the fuel from the fuel supply unit 10, a stack unit 30 for generating an electricity and heat according to an electrochemical reaction between the hydrogen gas generated from the reformer 20 and oxygen separately supplied, and a power converter 40 for converting the electricity generated from the stack unit 30.

The reformer 20 may include a desulfurization reactor 21 for introducing the fuel supplied from the fuel supply unit 10, water and air to thus remove sulfur contained in the fuel, a steam reformer 22 for reacting the fuel with steam, a high temperature steam reactor 23 for reacting carbon monoxide with steam, a low temperature steam reactor 24 for converting the carbon monoxide into carbon dioxide, a partial oxidation reactor 25 for converting non-oxidized carbon monoxide into carbon dioxide, a reaction furnace 26 for generating hydrogen from the fuel by a reforming process and a hydrogen refining process, and a burner 27 for supplying heat required to the reaction furnace 26 by being in contact with the reaction furnace 26.

A steam reforming reaction which occurs in the steam reforming reactor 22 may be represented using a chemical formula as follows.

CH₄ +H₂O → 3H₂ + CO

The steam reforming reaction represented as shown in the chemical formula refers to a representative reforming reaction which has been used in chemical processes for the pas few years, by which hydrogen output can advantageously be increased as compared to other processes. However, in terms of a characteristic of the reaction (process), a reactor with a great capacity is required therefor, such that the process must be requisitely optimized.

A water gas shift reaction denotes a reaction for converting carbon monoxide generated by the steam reforming reaction of the fuel supplied into the fuel cell into carbon dioxide and hydrogen, which can be represented using a chemical formula as follows.

CO + H₂O → CO₂ + H₂

In recent times, demand of the hydrogen has been increased in various industrial fields as well as in the field related to the hydrogen fuel cell, as a technology using hydrogen, and accordingly the hydrogen refining reaction is regarded as an important chemical process for increasing a degree of purity of hydrogen among reforming gases and decreasing concentration of CO.

Platinum Pt supported on alumina Al₂O₃ has been used as the catalyst for the water gas shift reaction of the related art fuel cell. However, since a less amount of hydrogen H₂ is generated as compared to an amount of the CO used in the water gas shift reaction, which problematically causes fuel with an enhanced quality not to be supplied to the stack unit 30 of the fuel cell.

### SUMMARY OF THE INVENTION

Therefore, an object of the present invention is to provide a catalyst for a water gas shift reaction of a fuel cell and a preparation method thereof, capable of supplying fuel with an enhanced quality to a stack unit by improving performance of a catalyst used in a reaction performed by a reformer of the fuel cell.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

ln the drawings:
Fig. 1 is a schematic view showing a structure of a fuel cell;
Fig. 2 is a flow chart showing a process for preparing a catalyst for a water gas shift reaction; and
Fig. 3 is a flow chart showing a process for supporting a precursor compound.

### DETAILED DESCRIPTION OF THE INVENTION

Description will now be given in detail of the present invention, with reference to the accompanying drawings.

A catalyst for a water gas shift reaction according to the present invention is prepared by supporting titanium or silver on a surface of a platinum catalyst supported on alumina. For supporting the titanium on the platinum catalyst, a weight ratio of platinum to titanium may preferably be 1 : 0.001~0.1. For supporting the silver thereon, a weight ratio of platinum to silver may preferably be 1 : 0.01~0.1. In case of supporting the titanium or silver based upon the weight ratio, thus, a conversion ratio from carbon dioxide (CO₂) into carbon monoxide (CO) and a generation ratio of hydrogen gas are enhanced to thus enable a supply of a fuel containing a large amount of hydrogen gas to the stack unit.

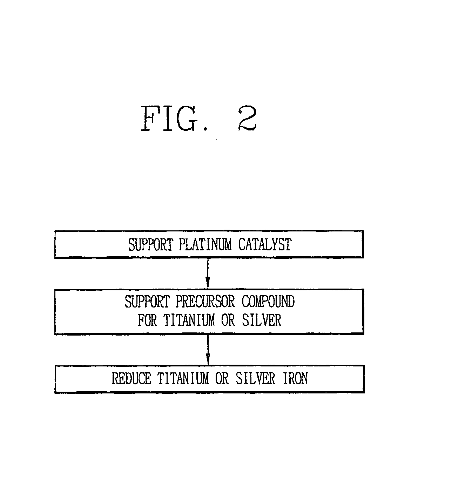

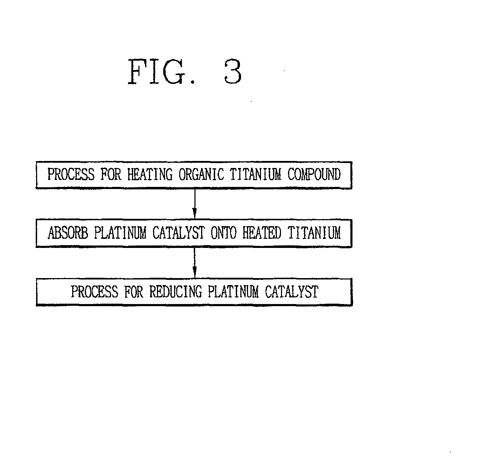

Fig. 2 is a flow chart showing a process for preparing a catalyst for a water gas shift reaction, and Fig. 3 is a flow chart showing a process for supporting a precursor compound.

As shown in Figs. 2 and 3, a method for preparing a catalyst for a water gas shift reaction according to the present invention can comprise:
(1) supporting a platinum catalyst on an alumina, (2);
(2) supporting a precursor compound for titanium or silver on the platinum catalyst; and
(3) reducing a titanium ion or silver ion supported on the platinum catalyst in a hydrogenous atmosphere.

In the present invention, a chemical vapor deposition technique is used in the step (2) for supporting the titanium on the platinum catalyst. Accordingly, the step (2) may include the processes of (a) heating an organic titanium compound in a nitrogenous atmosphere, (b) absorbing the heated titanium onto the platinum catalyst, and (c) reducing the platinum catalyst onto which the titanium has been absorbed in the hydrogenous atmosphere.

Regarding the heating of the process (a) in the step (2) is preferably performed at a temperature of 150 - 200 , and the nitrogenous atmosphere is effectively made such that a ratio of hydrogen gas to nitrogen gas is 5 : 1. The reduction of the process (c) in the step (2) is preferably performed at a temperature of 400 - 500 .

In the process (a) of the step (2), the organic titanium compound is sublimated at the temperature of 150 ~ 200, and the sublimated titanium is absorbed onto the platinum catalyst in a condition that a mixing ratio of hydrogen to nitrogen is 5 : 1. The titanium absorbed onto the platinum catalyst is heated and reduced at the temperature of 400 - 500 in the hydrogenous atmosphere, to thus obtain a titanium supported platinum catalyst for a water gas shift reaction.

The organic titanium compound which is the titanium precursor can be used in the amount such that a weight ratio of platinum to titanium is 1 : 0.001 - 0.01 in the catalyst finally obtained from the process (c) in the step (2).

Upon supporting the silver on the platinum catalyst, the step (2) may include the processes of (a) melting the precursor compound for the silver in water, (b) spraying and supporting a solution of the precursor compound onto the surface of the platinum catalyst, (c) firing the silver supported platinum catalyst, and (d) reducing the platinum catalyst on which the silver is coated in the hydrogenous atmosphere.

In the process (a) of the step (2), the precursor compound for the silver can be used in the amount such that a weight ratio of platinum to silver is 1: 0.001 - 0.1 in the silver supported platinum catalyst which is finally obtained from the process (b) in the step (2). The firing process (c) in the step (2) is preferably performed at a temperature of 400 - 450 , and the reducing process (d) in the step (2) is preferably performed at a temperature of 250 - 350 . Silver nitrate may be used as the precursor compound for the silver but it may not be limited thereto.

### Embodiment

Hereinafter, the present invention will be explained in more detail with reference to embodiments. However, the embodiments are adapted to the present invention to explain the same, and thus they may not limit the scope of the present invention.

### (First Embodiment)

A precursor H₂PtCl₂ which is melted in water was supported on an alumina support using one weight percent (wt%) of the platinum (Pt), to thereafter be dried for 12 hours at a temperature of 120 . The amount of platinum supported on the alumina support is adjustable, and may be appropriately adjusted by about 0.1 - 2 weight percent. In this first embodiment, the amount of the platinum was fixed to one weight percent to prepare the catalyst. The platinum supported alumina dry powder was then fired at a temperature 350 in the air.

A method for supporting a titanium metal onto the platinum catalyst obtained will now be explained.

An organic titanium precursor compound was heated by a temperature of 150 - 200 in a condition that a mixing ratio of nitrogen gas to hydrogen gas was 5 : 1 to thus chemically deposit the titanium precursor onto the platinum catalyst. The amount of the titanium was adjusted such that a weight ratio of platinum to titanium in a finally obtained catalyst was 1: 0.001. The catalyst on which the titanium had been deposited was reduced for two hours at a temperature of 250 ~ 350 in a hydrogenous atmosphere to thus obtain the catalyst for the water gas shift reaction according to the present invention.

### (Second Embodiment)

In this embodiment, the catalyst for the water gas shift reaction was prepared according to the same method as used in the first embodiment by using the organic titanium precursor compound in the amount such that a weight ratio of platinum to titanium in the finally obtained catalyst was 1: 0.01.

### (Third Embodiment)

The platinum catalyst was supported on the alumina as same as in the first embodiment. AgNO₃ was then melted in water to obtain a solution. The solution was sprayed over the platinum catalyst supported on the alumina to thereafter support the silver on the platinum catalyst. Here, the weight ratio of platinum to silver in the finally obtained catalyst was 1 : 0.001. Thereafter, the silver supported platinum catalyst was dried in the air for six hours at a temperature of 120 to thereafter be fired by a temperature of 400 - 450 . Then, the fired platinum catalyst was reduced at a temperature of 250 - 350 in the hydrogenous atmosphere, thereby obtaining the catalyst for the water gas shift reaction according to the present invention.

### (Fourth Embodiment)

In this embodiment, the catalyst for the water gas shift reaction was prepared using the same method as used in the third embodiment, except for spraying the solution made by melting the AgNO₃ in water on the platinum catalyst supported on the alumina, according to the same method as used in the first embodiment, by adjusting a weight ratio of platinum to silver in the finally obtained catalyst to be 1 : 0.01.

### (Fifth Embodiment)

In this embodiment, the catalyst for the water gas shift reaction was prepared using the same method as used in the third embodiment, except for spraying the solution made by melting the AgNO₃ in water on the platinum catalyst supported on the alumina, according to the same method as used in the first embodiment, by adjusting a weight ratio of platinum to silver in the finally obtained catalyst to be 1 : 0.1.

### (Exemplary Comparison)

In order to compare with each catalyst for the water gas shift reaction according to the present invention obtained by supporting the titanium or silver on the platinum catalyst, a precursor H₂PtCl₂ which is melted in water is supported on an alumina support using one weight percent of platinum to thereafter be dried for 12 hours at a temperature of 120 ,and then the platinum supported alumina dry powder was fired in the air at a temperature of 350 .

Table 1 denotes measurement results of each of carbon monoxide (CO) conversion ratio and hydrogen generation ratio (i.e., hydrogen selectivity) in conditions that catalysts prepared in the first through fifth embodiments are respectively used, an inner reaction temperature of a reformer is set to 300, fuel and catalyst supplied to the reformer flow by a space velocity of 5000/hr, a 10 percent of CO is contained in the fuel used in the water gas shift reaction, and a ratio of H20 to CO contained in the fuel is set to 3 : 2.

**[Table 1]**

| Containing ratio | CO conversion | H2 selectivity |
|---|---|---|
| Pt/Al₂O₃ | 95 | 80% |
| Pt-0.001Ti/AlTO₃ | 93 | 85% |
| Pt-0.01Ti/Al₂O₃ | 90 | 84% |
| Pt-0.001Ag/Al₂O₃ | 94 | 90% |
| Pt-0.01Ag/Al₂O₃ | 92 | 94% |
| Pt-0.1Ag/Al₂O₃ | 91 | 85% |

As shown in Table 1, the hydrogen gas generation ratio is increased when using the catalyst on which the titanium (Ti) or silver (Ag) is supported more than using, as the catalyst, the platinum (Pt) supported only on the alumina without supporting the titanium (Ti) or silver (Ag) thereon. Accordingly, a fuel having an enhanced quality containing a high rate of hydrogen gas can be supplied to the stack unit 30, to thus enable an improvement of efficiency of the fuel cell.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A catalyst for a water gas shift reaction of a fuel cell which is prepared by supporting titanium or silver on a surface of a platinum catalyst which is supported on an alumina and used in a water gas shift reaction.

2. The catalyst of claim 1, wherein upon supporting the titanium on the platinum catalyst, a weight ratio of platinum to titanium is 1 : 0.001 ~ 0.1.

3. The catalyst of claim 1, wherein upon supporting the silver on the platinum catalyst, a weight ratio of platinum to silver is 1: 0.01 - 0.1.

4. A method for preparing a catalyst for a water gas shift reaction of a fuel cell, comprising:
supporting a platinum catalyst on an alumina;
supporting a precursor compound for titanium or silver on the platinum catalyst; and
reducing a titanium ion or silver ion supported on the platinum catalyst in a hydrogenous atmosphere.

5. The method of claim 4, wherein the step of supporting the precursor compound for the titanium or silver on the platinum catalyst includes:
a process for heating the organic titanium compound in a nitrogenous atmosphere;
a process for absorbing the heated titanium onto the platinum catalyst; and
reducing the platinum catalyst onto which the titanium is absorbed in the hydrogenous atmosphere.

6. The method of claim 5, wherein the temperature for the heating is 150 - 200 .

7. The method of claim 5, wherein the nitrogenous atmosphere is implemented under a state in which a raio of hydrogenous gas to nitrogen gas is 5 : 1.

8. The method of claim 5, wherein a temperature for performing the reduction process is 400 ∼ 500 .
